# EUROPÄISCHE PATENTSCHRIFT

(11) **EP 4 268 993 B1**
(45) Veröffentlichungstag und Bekanntmachung des Hinweises auf die Patenterteilung: **06.11.2024**
(21) Anmeldenummer: 23169735.0
(22) Anmeldetag: 25.04.2023
(51) Int. Cl.: B22C 9/06, B22C 9/10, B22C 21/14, B22D 17/24, B29C 33/16

(54) **EINLAGEVORRICHTUNG UND VERFAHREN ZUR HERSTELLUNG EINES GUSSTEILS**
INSERT DEVICE AND METHOD FOR PRODUCING A CAST PART
DISPOSITIF D'INSERTION ET PROCÉDÉ DE FABRICATION DE PIÈCE MOULÉE

(30) Priorität: 27.04.2022 DE 102022110187
(43) Veröffentlichungstag der Anmeldung: 01.11.2023
(73) Patentinhaber: Ucosan BV, 9301 ZR Roden (NL)
(72) Erfinder: Vlieger, René Gerrit, 9401 LX Assen (NL); Krol, Geert Jannes, 9311 VJ Nieuw-Roden (NL)
(74) Vertreter: Meissner Bolte Partnerschaft mbB

(56) Entgegenhaltungen:
- WO-A1-2021/052594
- WO-A1-95/15268
- JP-A- S62 234 641
- KR-B1- 101 877 690
- US-A- 5 385 705
- US-A1- 2022 055 101

## Beschreibung

Die Erfindung betrifft eine Einlagevorrichtung für eine Gussform zur Bildung wenigstens einer Ausnehmung in einem Gussteil. Darüber hinaus bezieht sich die Erfindung auf eine Vorrichtung und ein Verfahren zur Herstellung eines Gussteils mit einer Gussform und mit wenigstens einer solchen Einlagevorrichtung.

Zur Herstellung von Gussteilen kommen Gussformen zum Einsatz, die zumindest zwei Formhälften umfassen. Die Formhälften begrenzen einen dazwischenliegenden Hohlraum, in dem ein eingebrachtes Gussmaterial aushärtet, bis das Gussteil ausgebildet ist. Zur Bildung von Ausnehmungen kommen Einlagevorrichtungen zum Einsatz, die im Hohlraum zwischen den Formhälften entsprechend angeordnet werden. Die Positionierung und Fixierung solcher Einlagevorrichtungen im Hohlraum stellt eine Herausforderung dar, wie beispielsweise aus den Veröffentlichungen WO 2021/052594 A1, JP S62 234641 A, US 2022/055101 A1, US 5 385 705 A, WO 95/15268 A1 oder KR 101 877 690 B1 hervorgeht, welche Verfahren und Formen zum Herstellen von Gussteilen beschreiben, wobei Einsätze beispielsweise mittels Magnetkraft oder mittels eines Trägers gehalten werden . Die Nachbearbeitung solcher Ausnehmungen ist aufwendig.

Es ist Aufgabe der vorliegenden Erfindung, eine Einlagevorrichtung für eine Gussform anzugeben, die die Bildung von Ausnehmungen in Gussteilen vereinfacht. Darüber hinaus ist es Aufgabe der vorliegenden Erfindung, eine Vorrichtung und ein Verfahren zur Herstellung eines Gussteils mit einer Gussform und mit wenigstens einer solchen Einlagevorrichtung bereitzustellen.

Diese Aufgabe wird erfindungsgemäß durch eine Einlagevorrichtung gemäß Anspruch 1 gelöst. Mit Blick auf die Vorrichtung wird die Aufgabe durch den Gegenstand des Anspruchs 11 und mit Blick auf das Verfahren durch den Gegenstand des Anspruchs 14 gelöst.

Im Konkreten wird die Aufgabe erfindungsgemäß durch eine Einlagevorrichtung für eine Gussform zur Bildung wenigstens einer Ausnehmung in einem Gussteil, insbesondere Öffnung und/oder Vertiefung, gelöst, wobei die Gussform zumindest zwei Formhälften aufweist. Die Einlagevorrichtung umfasst ein Gehäuse mit einem Aufnahmeraum und wenigstens eine Halteeinrichtung zum Halten des Gehäuses an zumindest einer der Formhälften, die in dem Aufnahmeraum angeordnet ist. Das Gehäuse weist wenigstens eine Außenform auf, die die Form der Ausnehmung des Gussteils zumindest abschnittsweise definiert. Die Halteeinrichtung umfasst wenigstens einen Magnet, der das Gehäuse im Gebrauch an der Formhälfte magnetisch fixiert.

Eine Ausnehmung kann eine Öffnung im Sinn einer Durchgangsöffnung sein, die einen Durchgang durch das Gussteil, bspw. durch eine Wand oder den Boden, bildet. Die Durchgangsöffnung ist auf beiden Seiten offen.

Eine Ausnehmung kann auch eine Vertiefung sein, die im Unterschied zur Durchgangsöffnung eine geschlossene Wandung aufweist. Im Bereich der Vertiefung ist die Wandstärke geringer als im angrenzenden Bereich außerhalb der Vertiefung. Damit lassen sich dünnwandige Strukturen herstellen.

Es gibt verschiedene Möglichkeiten einer solchen Vertiefung. Beispielsweise kann die Vertiefung ein Steg sein, der zwei Öffnungen bzw. Teilöffnungen voneinander trennt. Die Steghöhe ist dabei geringer als die Wandstärke des Materials, das die Öffnungen umgibt. Insofern bildet der Steg im Vergleich zur übrigen Wandstärke eine Vertiefung. Der Steg kann damit als filigrane Trennstruktur zwischen zwei Öffnungen ausgebildet sein. Insofern ist die Vertiefung auf einen lokal eng begrenzten Bereich zwischen zwei Öffnungen beschränkt.

Die Vertiefung kann auch als längliche Nut ausgebildet sein. Diese Nut kann eine Biegestelle bilden. Durch eine durch die Nut gezielt verursachte Materialschwächung kann das Gussteil mechanisch verformt werden. Die Vertiefung kann auch als Sollbruchstelle dienen, um das Gussteil an einer vorbestimmten Stelle zu brechen. Die Form der Einlagevorrichtung bestimmt die Form der Nut. Die Einlagevorrichtung kann bspw. einen dreieckförmigen Querschnitt aufweisen, wobei die Dreiecksspitze den entsprechend geformten Nutgrund bildet. Die Nut ist V-förmig. Andere Nutformen bspw. mit geraden oder annähernd geraden Wänden sind möglich.

Die Vertiefung kann somit in Abhängigkeit von der Form der Einlagevorrichtung verschiedene geometrische Formen annehmen, die an den jeweiligen Einsatzzweck angepasst sind.

Die Kombination von Vertiefung und Öffnung bzw. eine Kombination mehrerer Vertiefungen und Öffnungen ist möglich. Ein Beispiel dafür sind mehrere Teilöffnungen, die durch Stege getrennt sind, die flacher als das umgebende Material bzw. die umgebende Wandung sind. Die Einlagevorrichtung kann eine oder mehrere Ausnehmungen im Gussteil bilden.

Die Gussform weist zumindest zwei Formhälften auf. Bevorzugt weist die Gussform eine innenliegende Formhälfte und eine außenliegende Formhälfte auf. Die Formhälften begrenzen einen dazwischenliegenden Hohlraum zur Bildung des Gussteils.

Zumindest zwei der Formhälften weisen bevorzugt wenigstens eine gemeinsame Entformungsrichtung auf, wobei zur Entformung des Gussteils diese Formhälften in dieser Entformungsrichtung relativ voneinander entfernt und auf diese Weise vom Gussteil getrennt werden.

Die Einlagevorrichtung kann zur Bildung wenigstens einer Ausnehmung verwendet werden, die eine Hinterschneidung in Entformungsrichtung aufweist. Die zu bildende Ausnehmung muss aber nicht zwingend eine Hinterschneidung aufweisen.

Die Erfindung ermöglicht eine Verwendung der Einlagevorrichtung zur Bildung wenigstens einer Ausnehmung unabhängig von einer Entformungsrichtung.

Unter Hinterschneidung in Entformungsrichtung ist ein Abschnitt eines Gussteils zu verstehen, der aus der jeweiligen Entformungsrichtung betrachtet durch das Gussteil selbst verdeckt ist, sodass eine Bewegung einer diesen Abschnitt definierenden Gussform in Entformungsrichtung blockiert ist.

Die Einlagevorrichtung umfasst ein Gehäuse. Das Gehäuse erstreckt sich im Gebrauch mit seiner Außenform in den Hohlraum, um wenigstens eine Ausnehmung im Gussteil zu bilden. Auf diese Weise definiert die Außenform des Gehäuses die Form der wenigstens einen Ausnehmung zumindest abschnittsweise. Das Gehäuse der Einlagevorrichtung kann sich im Gebrauch derart mit seiner Außenform in den Hohlraum zwischen den Formhälften erstrecken, dass die zu bildende Öffnung eine Hinterschneidung in Entformungsrichtung aufweist und/oder frei von einer Hinterschneidung in Entformungsrichtung ist. Das Gehäuse der Einlagevorrichtung kann im Gebrauch zwischen den Formhälften unabhängig von einer Entformungsrichtung angeordnet sein.

Um das Gehäuse im Gebrauch an zumindest einer Formhälfte zu halten, umfasst die Einlagevorrichtung wenigstens eine Halteeinrichtung, die in einem Aufnahmeraum des Gehäuses angeordnet ist und wenigstens einen Magnet umfasst. Unter Magnet ist sowohl ein Mittel, das ein magnetisches Feld in seiner Umgebung erzeugt, als auch ein Mittel, dass wenigstens einen magnetischen Werkstoff aufweist und daher in einem magnetischen Feld magnetisch wirkt, insbesondere magnetisch angezogen wird, zu verstehen.

Der Magnet fixiert im Gebrauch das Gehäuse an der Formhälfte magnetisch, um wenigstens eine Ausnehmung bspw. wenigstens eine Öffnung mit einer Hinterschneidung in Entformungsrichtung im Gussteil zu bilden.

Der Magnet kann zur Verstärkung der Magnetkraft mehrere Einzelmagneten aufweisen. Die Einzelmagneten können übereinandergestapelt angeordnet sein. Andere Anordnungen sind möglich. Der Magnet kann auch lediglich einen Einzelmagneten umfassen. Mehrere Magneten können zu wenigstens einer Magnetgruppe zusammengefügt sein, um beispielsweise im Gebrauch die magnetische Fixierung räumlich zu fokussieren und/oder zu verteilen.

Die vorliegende Erfindung vereinfacht vorteilhafterweise die Bildung von Ausnehmungen in Gussteilen.

Im Gebrauch wird ein Gussmaterial in den Hohlraum zwischen einer ersten und einer zweiten Formhälfte eingebracht. Der wenigstens eine Magnet presst das Gehäuse dicht an die erste Formhälfte, insbesondere innenliegende Formhälfte, an, sodass kaum Gussmaterial zwischen Gehäuse und Formhälfte gelangt. Nach dem Aushärten des Gussmaterials wird die zweite Formhälfte, insbesondere außenliegende Formhälfte, entfernt. Die Einlagevorrichtung verbleibt in der gebildeten Ausnehmung des Gussteils, insbesondere aufgrund der magnetischen Fixierung des Gehäuses. Anschließend wird das Gussteil und/oder die Einlagevorrichtung entformt. Bevorzugt wird davor/dabei die magnetische Fixierung der Einlagevorrichtung gelöst, um die Einlagevorrichtung von der ersten Formhälfte, insbesondere innenliegenden Formhälfte, zu trennen.

Die vorliegende Erfindung erlaubt vorteilhafterweise die Bildung von Ausnehmungen, die weniger Nachbearbeitung erfordern. Die magnetische Fixierung des Gehäuses der Einlagevorrichtung an einer der Formhälften reduziert die Menge an Gussmaterial, das zwischen Gehäuse und Formhälfte gelangt, dort aushärtet, und im Rahmen einer Nachbearbeitung entfernt werden muss. Der Aufwand für die Nachbearbeitung der zu bildenden Ausnehmung ist dadurch reduziert.

Die Erfindung hat weitere Vorteile.

Mit einer erfindungsgemäßen Einlagevorrichtung können mehrere Ausnehmungen gleichzeitig gebildet werden. Die Ausnehmungen können als Öffnungen, Vertiefungen oder Kombinationen davon ausgebildet sein. Dies reduziert den Aufwand für die Herstellung der Gussform, für die Herstellung des Gussteils und für die Nachbearbeitung des Gussteils.

Eine erfindungsgemäße Einlagevorrichtung erlaubt vorteilhafterweise die Bildung von Ausnehmungen, die eine Hinterschneidung in Entformungsrichtung aufweisen kann und/oder frei von einer Hinterschneidung in einer Entformungsrichtung der Formhälften ist.

Ein weiterer Vorteil der Erfindung besteht darin, dass mit der Einlagevorrichtung Biegestellen und/oder Sollbruchstellen im Gussteil gebildet werden können.

Dadurch entfallen aufwändige Nachbearbeitungsschritte, wodurch der Aufwand weiter reduziert wird.

Bevorzugte Ausführungsformen der Erfindung sind in den Unteransprüchen angegeben.

In einer bevorzugten Ausführungsform der Erfindung weist die Halteeinrichtung wenigstens zwei Magnete auf, die in dem Aufnahmeraum nebeneinander angeordnet sind. Durch die Verwendung von wenigstens zwei Magneten wird die Magnetkraft erhöht. Im Gebrauch wird das Gehäuse der Einlagevorrichtung infolge dessen noch dichter an zumindest eine der Formhälften angepresst. Dies wird durch die Anordnung nebeneinander zusätzlich verstärkt. Besonders bevorzugt sind die Magneten derart nebeneinander angeordnet, dass die Magneten das Gehäuse im Gebrauch an mehr als an einer Stelle der Formhälfte magnetisch fixieren. Auf diese Weise wirkt die Magnetkraft räumlich verteilt, sodass die Fixierung zusätzlich verstärkt wird. Die Menge an Gussmaterial, das im Gebrauch zwischen Gehäuse und Formhälfte gelangt, wird reduziert, sodass der Aufwand für eine Nachbearbeitung weiter sinkt. Andere Anordnungen der Magnete zueinander sind möglich.

Vorzugsweise weist die Einlagevorrichtung wenigstens ein Positioniermittel auf, das an dem Gehäuse außen angeordnet und dazu angepasst ist, mit einem Gegenpositioniermittel einer der Formhälften formschlüssig zusammenzuwirken. Besonders bevorzugt weist die Einlagevorrichtung wenigstens zwei Positioniermittel auf, die an dem Gehäuse außen angeordnet und dazu angepasst sind, mit einem Gegenpositioniermittel einer der Formhälften formschlüssig zusammenzuwirken. Das Positioniermittel ist vorzugsweise dazu angepasst, mit einem Gegenpositioniermittel, das als Ausnehmung einer der Formhälften ausgebildet ist, formschlüssig zusammenzuwirken. Das Positioniermittel bildet im Gebrauch zusammen mit dem Gegenpositioniermittel einer der Formhälften einen Formschluss. Dies erleichtert die richtige Positionierung der Einlagevorrichtung an einer der Formhälften. Der Formschluss erlaubt eine Kraftübertragung zwischen Gehäuse und Formhälfte. So wird die magnetische Fixierung des Gehäuses an einer der Formhälften zusätzlich verstärkt. Ein Verrutschen des Gehäuses der Einlagevorrichtung relativ zur Formhälfte wird auf diese Weise vermieden. Das Positioniermittel kann auch dazu angepasst sein, mit einem einen Fortsatz bildenden, insbesondere stiftförmigen, Gegenpositioniermittel einer der Formhälften formschlüssig zusammenzuwirken. Andere Geometrien des Positioniermittels sind möglich.

Das Positioniermittel umfasst vorzugsweise wenigstens einen Fortsatz, insbesondere einen Stift, der von dem Gehäuse, insbesondere einem Boden des Gehäuses, abstehend ausgebildet ist. Der Fortsatz ist vom Gehäuse abstehend ausgebildet, sodass er im Gebrauch mit dem Gegenpositioniermittel, insbesondere Ausnehmung, einer der Formhälften formschlüssig zusammenwirkt. So ist eine einfache Positionierung und eine verstärkte Fixierung des Gehäuses an einer der Formhälften sichergestellt. Bevorzugt weist der Fortsatz wenigstens eine Seitenfläche, insbesondere Mantelfläche, auf, wobei die Seitenfläche eine Kraft zwischen dem Gehäuse und der Formfläche übertragen kann, um ein Verrutschen des Gehäuses der Einlagevorrichtung relativ zur Formhälfte zu unterbinden. Eine derartige konstruktive Gestaltung des Fortsatzes erleichtert die Positionierung und verstärkt die Fixierung des Gehäuses an einer der Formhälften im Gebrauch zusätzlich. Der Fortsatz kann beispielsweise die Form eines Kegelstumpfes aufweisen. Andere Geometrien des Fortsatzes sind möglich.

Bei einer weiteren bevorzugten Ausführungsform der erfindungsgemäßen Einlagevorrichtung ist der Magnet, insbesondere zumindest einer der Magneten, dem Positioniermittel zumindest abschnittsweise gegenüber angeordnet. Der Magnet ist also derart im Aufnahmeraum des Gehäuses angeordnet, dass das Positioniermittel auf der dem Magneten gegenüberliegenden Seite des Gehäuses und zumindest abschnittsweise dem Magneten gegenüberliegend angeordnet ist. Vorteil einer derartigen Anordnung ist, dass im Gebrauch der Magnet das zwischen dem Magneten und einer der Formhälften angeordnete Positioniermittel dicht an das Gegenpositioniermittel einer der Formhälften anpresst. Dadurch wird das Positioniermittel fest am Gegenpositioniermittel gehalten. Die Positionierung der Einlagevorrichtung an einer der Formhälften wird weiter erleichtert und die Fixierung des Gehäuses an einer der Formhälften zusätzlich verstärkt.

Es ist weiterhin bevorzugt, dass der Magnet, insbesondere die Magneten, plattenförmig und/oder zylindrisch ausgebildet ist. Der Magnet kann eine im Wesentlichen ebene Außenfläche aufweisen, die den übrigen im Wesentlichen ebenen Außenflächen des Magneten entspricht, oder größer als diese ist. Ein auf diese Weise ausgebildeter Magnet kann im Aufnahmeraum derart angeordnet sein, dass dessen Magnetkraft über diese Außenfläche verteilt wirkt. Dies verstärkt im Gebrauch das dichte Anpressen des Gehäuses an einer der Formflächen. Andere Geometrien des Magneten sind möglich.

In einer bevorzugten Ausführungsform weist das Gehäuse einen Boden auf, an dem der Magnet, insbesondere die Magnete, anliegt, wobei der Boden wenigstens eine Kontaktfläche aufweist, die dem Aufnahmeraum, insbesondere dem Magnet, gegenüber angeordnet ist und im Gebrauch durch Magnetkraft an einer der Formhälften flächig angepresst ist. Der Boden des Gehäuses liegt im Gebrauch zwischen dem Magneten und einer der Formhälften, sodass der Magnetkraft die Kontaktfläche des Bodens an einer der Formhälften flächig anpresst. Durch das flächige Anpressen der Kontaktfläche an einer der Formhälften wird der dichte Sitz des Gehäuses an der Kontaktfläche weiter verstärkt. Vorteilhafterweise erleichtert dies die Positionierung der Einlagevorrichtung an einer der Formflächen und verstärkt die magnetische Fixierung der Einlagevorrichtung an einer der Formflächen.

Um den Aufnahmeraum vor dem Eindringen von Gussmaterial zu schützen, weist das Gehäuse vorzugsweise wenigstens einen Deckel auf, der den Aufnahmeraum des Gehäuses fluidabdichtend verschließt.

Der Deckel ist bevorzugt dem Boden gegenüber angeordnet, wobei der Deckel wenigstens eine offene und/oder geschlossene Seite und der Boden wenigstens eine offene und/oder geschlossene Seite der zu bildenden Ausnehmung, insbesondere Öffnung oder Vertiefung definiert. Besonders bevorzugt definiert die Kontaktfläche des Bodens zumindest abschnittsweise wenigstens eine offene Seite der zu bildenden Öffnungen.

Im Boden, insbesondere in der Kontaktfläche, können bei einer weiteren bevorzugten Ausführungsform negative Profile, bspw. in Form von Schlitzen oder Aussparungen vorgesehen sein. Ein derartiges negatives Profil bildet im Gebrauch einen dem Profil entsprechenden Leerraum zwischen dem Boden des Gehäuses und einer der Formhälften, sodass Gussmaterial in diesen Leerraum gelangen und dort aushärten kann. Dadurch lassen sich dünnwandige Strukturen, wie Stege, zwischen den Öffnungen bzw. Teilöffnungen bilden, die auch als lokale Vertiefungen bezogen auf die dickere Wandung angesehen werden können, die die Öffnungen umgibt.

Zusätzlich oder alternativ können in Analogie dazu negative Profile im Deckel des Gehäuses vorgesehen sein.

Es ist auch möglich, dass der Deckel derart ausgebildet ist, dass im Gebrauch zwischen dem Deckel und einer der Formhälften ein durchgehender Spalt ausgebildet ist, in den Gussmaterial gelangen und dort aushärten kann. Die Ausnehmung im Gussteil ist dann eine geschlossene Vertiefung im Gussteil. Die Vertiefung kann durch eine entsprechende positive Profilierung des Deckels lokal unterbrochen sein und eine oder mehr Öffnungen aufweisen.

Damit können unterschiedliche geometrische Strukturen wie Durchgangsöffnungen, Aussparungen und Kombinationen davon gebildet werden.

Andere Anordnungen und Geometrien von Boden und Deckel sind möglich.

Vorzugsweise weist das Gehäuse wenigstens eine Seitenwand auf, die den Aufnahmeraum umlaufend begrenzt, wobei die Seitenwand zumindest abschnittsweise eine Formschräge bildet. Die Formschräge vereinfacht ein Entformen der Einlagevorrichtung von dem Gussteil. Die Einlagevorrichtung kann somit beim Entformen von wenigstens einer Formhälfte einfach getrennt werden, beispielsweise durch Herausziehen der Einlagevorrichtung aus dem Gussteil.

Es ist weiterhin bevorzugt, dass die Außenform, insbesondere die Seitenwand, des Gehäuses frei von einer Hinterschneidung ist. Auf diese Weise entfallen aufwendige materialbearbeitende Maßnahmen zur Entfernung von Hinterschneidungen, die andernfalls für ein zerstörungsfreies Entformen der Einlagevorrichtung vor dem Entformen notwendig wären.

Ein nebengeordneter Aspekt der Erfindung betrifft eine Vorrichtung zur Herstellung eines Gussteils mit einer Gussform, die wenigstens zwei Formhälften, insbesondere eine innenliegende und eine außenliegende Formhälfte, aufweist, und wenigstens einer zuvor beschriebenen Einlagevorrichtung. Die Formhälften begrenzen einen dazwischenliegenden Hohlraum zur Bildung des Gussteils. Die Einlagevorrichtung ist an einer der beiden Formhälften derart magnetisch fixiert, dass sich das Gehäuse mit seiner Außenform in den Hohlraum erstreckt.

Zur Wirkung und zu den Vorteilen der erfindungsgemäßen Vorrichtung wird auf die vorstehend beschriebenen Wirkungen und Vorteile im Zusammenhang mit der Einlagevorrichtung verwiesen.

In einer bevorzugten Ausführungsform der Vorrichtung ist die Formhälfte, insbesondere die innenliegende Formhälfte, an der die Einlagevorrichtung angeordnet ist, zur Fixierung der Einlagevorrichtung zumindest abschnittsweise magnetisch. Besonders bevorzugt ist die Formhälfte aus einem magnetischen Werkstoff, insbesondere umfassend Eisen, Nickel, Kobalt oder eine Kombination davon, gebildet. Dadurch wird der Aufbau der Gussform vereinfacht, da weitere magnetische Bauteile zur magnetischen Fixierung der Einlagevorrichtung an einer der beiden Formhälften eingespart werden können. Die Formhälfte kann lokal oder abschnittsweise magnetisch sein. Die Formhälfte kann wenigstens einen Magneten umfassen, der dazu ausgebildet ist, mit der Einlagevorrichtung magnetisch zusammen zu wirken.

In einer weiteren bevorzugten Ausführungsform der Vorrichtung weist wenigstens eine der beiden Formhälften, insbesondere die innenliegende Formhälfte, wenigstens ein Gegenpositioniermittel auf, das mit wenigstens einem Positioniermittel des Gehäuses der Einlagevorrichtung formschlüssig zusammenwirkt. Besonders bevorzugt weist die Formhälfte wenigstens zwei Gegenpositioniermittel auf, die mit wenigstens zwei Positioniermitteln des Gehäuses der Einlagevorrichtung formschlüssig zusammenwirken. Das Gegenpositioniermittel ist vorzugsweise als Ausnehmung der Formhälfte ausgebildet. Das Gegenpositioniermittel ist bevorzugt dazu ausgebildet, mit einem Positioniermittel des Gehäuses zusammenzuwirken, dass wenigstens einen Fortsatz, insbesondere einen Stift, umfasst, der von dem Gehäuse, insbesondere einem Boden des Gehäuses, abstehend ausgebildet ist. Das Gegenpositioniermittel der Formhälfte bildet zusammen mit dem Positioniermittel des Gehäuses einen Formschluss. Dies erleichtert die richtige Positionierung der Einlagevorrichtung an der Formhälfte. Der Formschluss erlaubt eine Kraftübertragung zwischen Gehäuse der Einlagevorrichtung und Formhälfte. So wird die magnetische Fixierung der Einlagevorrichtung an der Formhälfte verstärkt. Ein Verrutschen der Einlagevorrichtung relativ zur Formhälfte wird auf diese Weise vermieden.

Ein weiterer nebengeordneter Aspekt der Erfindung betrifft ein Verfahren zur Herstellung eines Gussteils mit wenigstens einer Ausnehmung, insbesondere Öffnung und/oder Vertiefung, unter Verwendung wenigstens einer Gussform mit wenigstens zwei Formhälften und wenigstens einer zuvor beschriebenen Einlagevorrichtung. Das Verfahren umfasst folgende Schritte. Die Einlagevorrichtung wird an einer ersten der beiden Formhälften durch Magnetkraft fixiert. Beide Formhälften werden anschließend zur Bildung eines Hohlraums zusammengesetzt, wobei sich die Einlagevorrichtung in den Hohlraum erstreckt. In den Hohlraum wird ein fließfähiges Gussmaterial eingebracht, das die Außenform des Gehäuses der Einlagevorrichtung zumindest abschnittsweise umschließt. Das eingebrachte Gussmaterial härtet aus, wobei ein Gussteil ausgebildet wird. Im Anschluss wird zumindest eine der beiden Formhälften, insbesondere die zweite Formhälfte, entfernt und das Gussteil und/oder die Einlagevorrichtung entformt, insbesondere derart entformt, dass die magnetische Fixierung der Einlagevorrichtung gelöst wird.

Zu den Vorteilen des Verfahrens wird auf die im Zusammenhang mit der zuvor beschriebenen Einlagevorrichtung und Vorrichtung erläuterten Vorteile verwiesen.

Vorzugsweise ist bei dem Verfahren vorgesehen, dass beim Entformen des Gussteils die Einlagevorrichtung von der ersten Formhälfte getrennt wird und/oder das Entformen der Einlagevorrichtung vor dem Entformen des Gussteils erfolgt. Somit ist sichergestellt, dass die Formhälften unabhängig von der Einlagevorrichtung entformt werden, sodass vorteilhafterweise die wenigstens eine Öffnung unabhängig von einer Entformungsrichtung der Formhälften gebildet wird.

Die Erfindung wird im Folgenden anhand von Ausführungsbeispielen unter Bezugnahme auf die beigefügten, schematischen Zeichnungen näher erläutert. Darin zeigen:
- Fig. 1: ein Gussteil mit einer Öffnung, die mit einer Einlagevorrichtung nach einem erfindungsgemäßen Ausführungsbeispiel gebildet ist;
- Fig. 2: ein weiteres Gussteil mit weiteren Öffnungen, die mit einer Einlagevorrichtung nach einem erfindungsgemäßen Ausführungsbeispiel gebildet ist;
- Fig. 3: einen Querschnitt einer Einlagevorrichtung nach einem erfindungsgemäßen Ausführungsbeispiel im Gebrauch;
- Fig. 4: eine perspektivische Ansicht eines Drahtmodells der Einlagevorrichtung aus Fig. 3;
- Fig. 5: eine perspektivische Ansicht der Einlagevorrichtung aus Fig. 3;
- Fig. 6: eine weitere perspektivische Ansicht der Einlagevorrichtung aus Fig. 3;
- Fig. 7: eine perspektivische Ansicht einer Einlagevorrichtung nach einem weiteren erfindungsgemäßen Ausführungsbeispiel;
- Fig. 8: eine perspektivische Ansicht einer innenliegenden Formhälfte einer Gussform, die für eine erfindungsgemäße Einlagevorrichtung geeignet ist;
- Fig. 9: einen Querschnitt einer Einlagevorrichtung nach einem weiteren erfindungsgemäßen Ausführungsbeispiel im Gebrauch; und
- Fig. 10: eine Explosionsdarstellung der Einlagevorrichtung aus Fig. 9.

In den beigefügten Figuren sind bevorzugte Ausführungsbeispiele einer Einlagevorrichtung gezeigt. Einlagevorrichtungen gemäß den beigefügten Figuren kommen beim Gießen von Produkten im Sanitärbereich, insbesondere aus Kunststoff, bevorzugt aus Quaryl^{®}, einem Material aus der Verbindung von natürlichem Quarzgestein und Sanitäracryl zum Einsatz. Die Produkte umfassen beispielsweise Badewannen, Duschwannen und Waschbecken. Konkret werden die Einlagevorrichtungen zur Bildung von Ausnehmungen, insbesondere Öffnungen und/oder Vertiefungen in Gussteilen im Sanitärbereich verwendet. Es ist auch möglich, das erfindungsgemäße Konzept zur Bildung von derartigen Ausnehmungen in anderen Gussteilen einzusetzen. Die Erfindung kann allgemein im Zusammenhang mit dem Gießen verwendet werden.

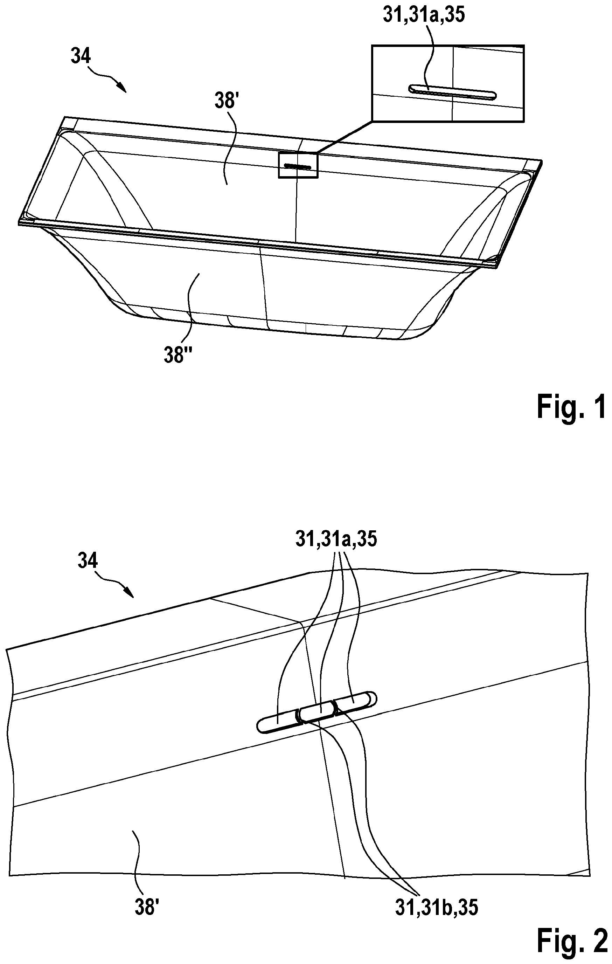

Fig. 1 zeigt ein Gussteil 34 mit einer Ausnehmung 31 in der Form einer Öffnung 31a, die mit einer Einlagevorrichtung nach einem erfindungsgemäßen Ausführungsbeispiel gebildet ist. Das gezeigte Gussteil 34 weist eine Sichtseite 38' und eine Rückseite 38" auf. Die Sichtseite 38' entspricht der Seite, die im eingebauten Zustand sichtbar ist. Die Rückseite 38" ist hingegen im eingebauten Zustand nicht sichtbar, indem sie beispielsweise durch eine Verkleidung verdeckt ist.

Das Gussteil 34 ist in diesem Beispiel eine Badewanne, die im oberen Bereich mittig die Öffnung 31a aufweist. Die gezeigte Öffnung 31a dient als Überlauföffnung der Badewanne 34 und ist als Durchgangsöffnung mit zwei offenen Seiten ausgebildet. Die Öffnung 31a weist eine längliche Form 35 auf, die im Gebrauch im Wesentlichen parallel zu einer ruhenden Wasseroberfläche in der Badewanne angeordnet ist. Andere Geometrien und Positionen der Öffnung 31a sind möglich.

Fig. 2 zeigt ein weiteres Gussteil 34 mit mehreren Öffnungen 31a, die mit einer Einlagevorrichtung nach einem erfindungsgemäßen Ausführungsbeispiel gebildet sind. Im Vergleich zum Gussteil 34 aus Fig. 1 weist das Gussteil 34 aus Fig. 2 drei Öffnungen 31a, insbesondere Durchgangsöffnungen auf, die durch zwei Stege in der Form von Vertiefungen 31b voneinander getrennt sind. Die beiden Vertiefungen 31b bilden jeweils eine dünnwandige Struktur zwischen zwei Durchgangsöffnungen 31a. Die beiden Stege bzw. Vertiefungen 31b sind bündig mit der Sichtseite 38' des Gussteils 34 ausgebildet. Die Stege bzw. Vertiefungen 31b sind also auf der Rückseite 38" des Gussteils 34 angeordnet.

Die Vertiefung 31b kann auch als eine bezogen auf eine Seite des Gussteils zurückgesetzte Struktur verstanden werden.

Die Ausnehmungen 31 aus Fig. 1 und Fig. 2 stellen lediglich beispielhafte Ausnehmungen dar. Die wenigstens eine Ausnehmung kann andere Geometrien und Anordnungen aufweisen.

Vertiefungen 31b, die mit einer Einlagevorrichtung nach einem erfindungsgemä-ßen Ausführungsbeispiel gebildet sind, können beispielsweise dazu angepasst sein, Düsen, Überlaufteile oder andere Elemente bündig mit der Sichtseite 38' aufzunehmen. Derartige Vertiefungen 31b können als Ablage oder Behälter für Seifen, Becher oder andere Dinge ausgebildet sein.

Die dünnwandigen Strukturen, die mit einer Einlagevorrichtung nach einem erfindungsgemäßen Ausführungsbeispiel gebildet sind, können im Wesentlichen lichtdurchlässig sein, um beispielsweise mit einer hinter der dünnwandigen Struktur angeordneten Lichtquelle einen Lichteffekt zu bilden.

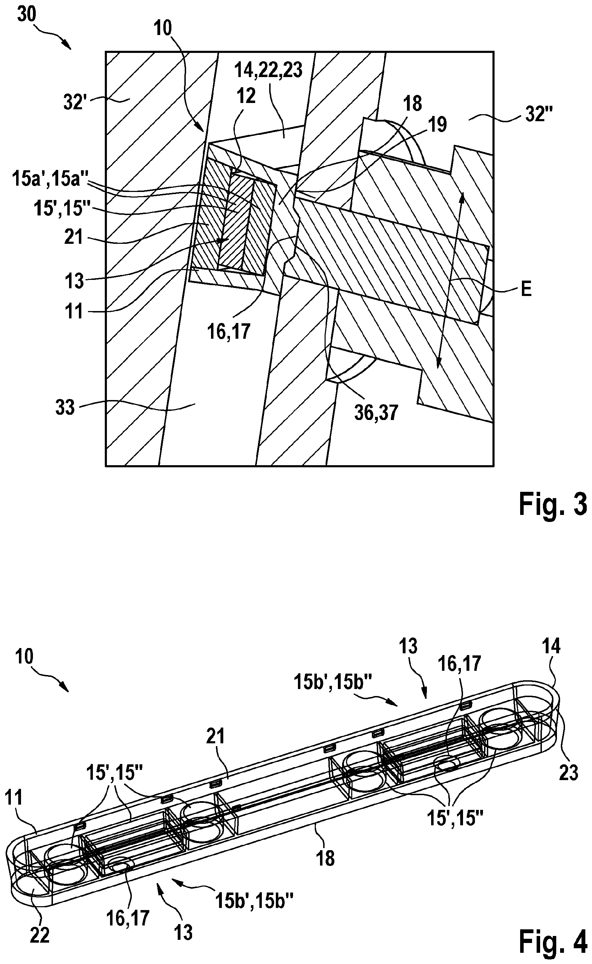

In Fig. 3 ist ein Querschnitt einer Einlagevorrichtung 10 nach einem erfindungsgemäßen Ausführungsbeispiel dargestellt, die zur Bildung der Ausnehmung 31 gemäß Fig. 1 verwendet werden kann. Die in Fig. 3 gezeigte Anordnung der Einlagevorrichtung entspricht einer Anordnung im Gebrauch, d. h. während des Gießens.

Es ist eine Gussform 30 gezeigt. Die Gussform 30 weist zwei Formhälften 32', 32" auf. Die erste Formhälfte 32" ist innenliegend in Bezug auf das Gussteil 34 angeordnet, sodass sie die Sichtseite 38' des Gussteils 34 definiert. Die zweite Formhälfte 32' ist außenliegend in Bezug auf das Gussteil 34 angeordnet und definiert daher die Rückseite 38" des Gussteils 34. Andere Anordnungen sind möglich.

Die Formhälften 32', 32" weisen eine Entformungsrichtung E auf. Um das Gussteil 34 zu entformen, werden die Formhälften 32', 32" und das Gussteil 34 in Entformungsrichtung E relativ voneinander entfernt. Auf diese Weise werden die Formhälften 32', 32" vom Gussteil 34 getrennt, sodass das Gussteil 34 entformt wird.

Die Formhälften 32', 32" begrenzen einen dazwischenliegenden Hohlraum 33 zur Bildung des Gussteils 34. Zwischen den beiden Formhälften 32', 32", also im Hohlraum 33, ist die Einlagevorrichtung 10 angeordnet. Die Einlagevorrichtung 10 ist derart angeordnet, dass die zu bildende Öffnung 31a eine Hinterschneidung in Entformungsrichtung E aufweist.

Die Einlagevorrichtung 10 umfasst ein Gehäuse 11. Das Gehäuse 11 weist einen ebenen Boden 18 auf, an dem eine umlaufende Seitenwand 22 vom Boden 18 abstehend ausgebildet ist. Das Gehäuse 11 weist einen Deckel 21 auf. Der Deckel 21 ist im Wesentlichen eben ausgebildet. Der Deckel 21 ist dem Boden 18 gegenüber angeordnet. Der Boden 18 und der Deckel 21 sind durch die umlaufende Seitenwand 22 miteinander verbunden. Das Gehäuse 11 weist eine längliche Geometrie mit einer Längsrichtung auf. In Fig. 1 steht die Längsrichtung des Gehäuses 11 senkrecht auf der gezeigten Schnittfläche. Andere Geometrien sind möglich.

Das Gehäuse 11 weist eine Außenform 14 auf, mit der es sich in den Hohlraum 33 erstreckt. Auf diese Weise definiert die Außenform 14 zumindest abschnittsweise die Form 35 der Ausnehmung 31, konkret der Öffnung 31a des Gussteils 34 aus Fig. 1. Das Gehäuse 11 erstreckt sich also mit seiner Außenform 14 derart in den Hohlraum 33, dass die auf diese Weise zu bildende Öffnung 31a eine Hinterschneidung in Entformungsrichtung E aufweist. Der Boden 18 definiert die offene Seite der Öffnung 31a, die an der Sichtseite 38" des Gussteils 34 angeordnet ist. Dazu liegt der Boden 18 dicht an der innenliegenden Formhälfte 32" an, sodass die Menge an Gussmaterial, das zwischen Boden 18 und Formhälfte 32" gelangt, reduziert ist. Der Deckel 21 definiert die andere offene Seite der Öffnung 31, also die offene Seite an der Rückseite 38" des Gussteils 34. Dazu liegt der Deckel 21 an der außenliegenden Formhälfte 32' an, sodass die Menge an Gussmaterial, das zwischen Deckel 21 und Formhälfte 32' gelangt, ebenfalls reduziert ist. Das nach dem Aushärten verbliebene Gussmaterial zwischen Boden 18 und Formhälfte 32" bzw. Deckel 21 und Formhälfte 32' kann im Rahmen einer Nachbearbeitung entfernt werden, um die Öffnung 31a aus Fig. 1 zu erhalten.

Um wenigstens eine Vertiefung 31b bzw. eine vertiefte oder zurückgesetzte Struktur oder eine Kombination aus wenigstens einer Durchgangsöffnung 31a und Vertiefung 31b zu bilden, kann zwischen Boden 18 und innenliegende Formhälfte 32" ein negatives Profil in der Form eines lokalen Spalts vorgesehen sein. Mit anderen Worten kann im Boden 18 ein profilierter Freiraum vorgesehen sein, der mit dem Hohlraum 33 fluidisch verbunden ist, sodass Gussmaterial vom Hohlraum 33 in den Freiraum, konkret in den Spalt gelangen und dort aushärten kann. Ein derartiger Spalt definiert die Form einer dünnwandigen Struktur, wie sie beispielsweise in Fig. 2 gezeigt ist.

Auf die gleiche Weise kann auch eine Vertiefung 31b durch einen Spalt zwischen dem Deckel 21 und außenliegende Formhälfte 32' gebildet werden. Dabei kann über die Form des Spaltes die Form der dünnwandigen Struktur definiert werden. Zwischen dem Deckel 21 und der außenliegenden Formhälfte 32' kann auch ein durchgehender Spalt ausgebildet sein, sodass der Deckel 21 eine geschlossene Seite der zu bildenden Ausnehmung 31, konkret Vertiefung 31b definiert.

Das Gehäuse 11 umfasst einen Aufnahmeraum 12, der vom Gehäuse fluiddicht umschlossen wird. Dabei wird der Aufnahmeraum 12 von der Seitenwand 22 umlaufend begrenzt. Der Boden 18 und der Deckel 21 begrenzen die übrigen Seiten des Aufnahmeraums 12, wobei der Deckel 21 den Aufnahmeraum 12 des Gehäuses 11 fluidabdichtend verschließt.

Die Einlagevorrichtung 10 umfasst wenigstens eine Halteeinrichtung 13 zum Halten des Gehäuses 11 an der innenliegenden Formhälfte 32". Die Halteeinrichtung 13 ist im Aufnahmeraum 12 des Gehäuses 11 angeordnet. Die Halteeinrichtung 13 umfasst wenigstens einen Magnet 15', 15", der das Gehäuse 11 an der Formhälfte 32" magnetisch fixiert.

Die Halteeinrichtung 13 des Ausführungsbeispiels aus Fig. 3 umfasst sechs Magnete 15', 15". Die Magnete 15', 15" erzeugen in ihrer Umgebung ein magnetisches Feld, in dem die innenliegende Formhälfte 32" magnetisch wirkt. Die Formhälfte 32" ist aus einem magnetischen Werkstoff, insbesondere umfassend Eisen, Nickel, Kobalt oder eine Kombination davon, gebildet, sodass die Halteeinrichtung 13 und die Formhälfte 32" sich magnetisch anziehen. Die Formhälfte 32" kann auch abschnittsweise bzw. lokal magnetisch sein. Die Formhälfte 32" kann wenigstens einen Magneten, insbesondere in der Nähe der Gegenpositioniermittel 36, umfassen. Dieser Magnet kann im magnetischen Feld der Magneten 15', 15" magnetisch wirken, also magnetisch angezogen werden. Es ist auch möglich, dass dieser Magnet in seiner Umgebung ein magnetisches Feld erzeugt. In einem solchen Fall kann die Halteeinrichtung einen magnetischen Werkstoff umfassen, der in diesem magnetischen Feld magnetisch wirkt, also magnetisch angezogen wird.

Die Magnete 15', 15" sind im Aufnahmeraum 12 in Längsrichtung des Gehäuses nebeneinander angeordnet. Zwei der Magnete 15', 15" sind plattenförmig und drei der Magnete 15', 15" zylinderförmig ausgebildet.

In Fig. 3 ist einer der plattenförmigen Magneten 15', 15" im Schnitt gezeigt. Es ist zu erkennen, dass der geschnittene Magnet 15', 15" zwei übereinander gestapelte Einzelmagnete 15a', 15a" umfasst. Der Magnet 15', 15" kann auch einen oder mehr als zwei Einzelmagneten 15a', 15a" umfassen. Die Einzelmagnete 15a', 15a" können andere Anordnungen zueinander aufweisen.

Die Einlagevorrichtung 10 weist zwei Positioniermittel 16 auf, die an dem Gehäuse 11 außen angeordnet sind. Die Positioniermittel 16 sind dazu angepasst, mit einem Gegenpositioniermittel 36 der Formhälfte 32" formschlüssig zusammenzuwirken.

Die Positioniermittel 16 umfassen jeweils einen Fortsatz 17, der von dem Gehäuse 11, konkret dem Boden 18 des Gehäuses 11, abstehend ausgebildet ist. Der Fortsatz 17 ist als Stift ausgebildet. Der Fortsatz 17 weist im Wesentlichen die Geometrie eines Kegelstumpfes auf, dessen Grundfläche mit dem Boden 18 des Gehäuses 11 zusammenfällt, sodass der Fortsatz 17 mit seiner den Stumpf bildenden Deckfläche vom Boden 18 absteht. Die Positioniermittel 16, konkret die Fortsätze 17, sind im Wesentlichen mittig in Bezug auf die sich in Längsrichtung des Gehäuses erstreckenden Abschnitte der umlaufende Seitenwand 22 angeordnet. Andere Geometrien und Anordnungen der Positioniermittel 16 sind möglich. So können beispielsweise die Positioniermittel 16 jeweils eine Ausnehmung des Bodens 18 des Gehäuses, anstelle eines Fortsatzes, umfassen. Eine solche Ausnehmung kann dazu angepasst sein, mit einem Gegenpositioniermittel 36 wenigstens einer der Formhälften 32', 32" formschlüssig zusammenzuwirken.

Die Gegenpositioniermittel 36 umfassen jeweils eine Ausnehmung 37 der Formhälfte 32". Die Ausnehmung 37 weist im Wesentlichen die Geometrie eines Kegelstumpfes auf, dessen Grundfläche mit der die Sichtseite 38' bildenden Außenfläche der Formhälfte 32" zusammenfällt, sodass die Ausnehmung 37 mit ihrer den Stumpf bildenden Deckfläche in die Formhälfte 32" hineinragt. Andere Geometrien und Anordnungen der Gegenpositioniermittel 36 sind möglich. So können beispielsweise die Gegenpositioniermittel 36 jeweils einen Fortsatz, insbesondere einen Stift, umfassen, der von der die Sichtseite 38' bildenden Außenfläche der innenliegenden Formhälfte 32" abstehend ausgebildet ist. Ein solcher Fortsatz kann dazu angepasst sein, mit einem Positioniermitteln 16 der Einlagevorrichtung 10 formschlüssig zusammenzuwirken

Die Gegenpositioniermittel 36 weisen jeweils eine Form auf, die dazu angepasst ist, mit dem Positioniermittel 16 der Einlagevorrichtung 10 zusammenzuwirken. Mit anderen Worten weisen die Positioniermittel 16 jeweils eine Form auf, die dazu angepasst ist, mit dem Gegenpositioniermittel 36 zusammen zu wirken. Der Fortsatz 17 der Einlagevorrichtung greift hierzu in die Ausnehmung 37 der innenliegenden Formhälfte 32" ein.

Der Fortsatz 17 weist eine Seitenfläche, konkret eine Mantelfläche, auf, die mit der Seitenfläche, konkret Mantelfläche, der Ausnehmung 37 der innenliegenden Formhälfte 32" formschlüssig zusammenwirkt. Dieser Formschluss zwischen Fortsatz 17 und Ausnehmung 37 unterbindet ein Verrutschen des Gehäuses 11, konkret der Einlagevorrichtung 10, und der innenliegenden Formhälfte 32" relativ zueinander. Der Formschluss verstärkt somit die Positionierung und Fixierung der Einlagevorrichtung 10 an der Formhälfte 32". Dazu kann eine Kraft zwischen der Seitenfläche des Fortsatzes 17 und der Seitenfläche der Ausnehmung 37 übertragen werden. Diese Kraftübertragung unterbindet eine relative Bewegung im Wesentlichen tangential zur Außenfläche der innenliegenden Formhälfte 32" zwischen Gehäuse 11 und Formhälfte 32".

Die Magnete 15', 15" sind den Positioniermittel 16 zumindest abschnittsweise gegenüber angeordnet. Die Magnete 15', 15" liegen im Aufnahmeraum 12 am Boden 18 des Gehäuses 11 an. Die Positioniermittel sind auf der den Magneten 15', 15" bzw. dem Aufnahmeraum 12 gegenüberliegenden Seite des Bodens 18 angeordnet sind. Dabei sind zwei der sechs Magnete 15', 15" den Positioniermittel 16 gegenüber angeordnet, sodass jeweils ein Positioniermittel 16 zwischen einem Magneten 15', 15" und einem Gegenpositioniermittel 36 angeordnet ist.

Auf diese Weise werden die Positioniermittel 16 dicht an die Gegenpositioniermittel 36 der Formhälfte 32" angepresst. Die Positionierung der Einlagevorrichtung 10 an der Formhälfte 32" wird somit erleichtert und Fixierung der Einlagevorrichtung 10 an der Formhälfte 32" verstärkt.

Der Boden 18 weist eine Kontaktfläche 19 auf, die dem Aufnahmeraum 12, konkret dem Magnet 15', 15", gegenüber angeordnet ist. Die Kontaktfläche 19 steht im Kontakt mit der die Sichtseite 38' bildenden Außenfläche der innenliegenden Formhälfte 32".

Die Kontaktfläche 19 wird durch die Magnetkraft an die Formhälfte 32" flächig angepresst. Das flächige Anpressen der Kontaktfläche 19 an die Formhälfte 32" verstärkt die Fixierung der Einlagevorrichtung 10, konkret des Gehäuses 11, an der Formhälfte 32" zusätzlich.

Die umlaufende Seitenwand 22 des Gehäuses bildet eine Formschräge 23. Die Formschräge 23 ist zur Formhälfte 32" zulaufend ausgebildet. Somit kann die Einlagevorrichtung 10 nach dem Entfernen der Formhälfte 32' entformt werden, indem die Einlagevorrichtung 10 von der Formhälfte 32" getrennt und in die ihr entgegengesetzte Richtung aus dem Gussteil 34 herausgezogen wird.

Die Außenform 14 und im Besonderen die Seitenwand 22 ist frei von einer Hinterschneidung, sodass zum Entformen der Einlagevorrichtung keine aufwendigen materialbearbeitenden Maßnahmen notwendig sind.

In Fig. 3 ist eine Vorrichtung zur Herstellung des Gussteils 34, wie in Fig. 1 abgebildet, mit der Gussform 30 umfassend die innenliegende Formhälften 32" und die außenliegende Formhälfte 32' und mit der Einlagevorrichtung 10 gezeigt. Die Formhälften 32', 32" der Vorrichtung begrenzen den dazwischenliegenden Hohlraum 33 zur Bildung des Gussteils 34. Die Einlagevorrichtung 10 der Vorrichtung ist an der innenliegenden Formhälften 32" magnetisch fixiert, sodass im Gebrauch kaum Gussmaterial zwischen Einlagevorrichtung 10 und Formhälften 32" gelangt. Dazu ist die innenliegende Formhälfte 32" zumindest abschnittsweise magnetisch. Die innenliegende Formhälfte 32" weist das Gegenpositioniermittel 36 auf, das mit dem Positioniermittel 16 des Gehäuses 11 der Einlagevorrichtung 10 formschlüssig zusammenwirkt. Auf diese Weise erstreckt sich das Gehäuse 11 mit seiner Außenform 14 in den Hohlraum 33, sodass eine Ausnehmung 31 unabhängig von der Entformungsrichtung E gebildet werden kann.

Das Gussteil 34 mit der Ausnehmung 31, wie in Fig. 1 abgebildet, wird unter Verwendung der Gussform 30 mit den beiden Formhälften 32', 32" und der Einlagevorrichtung 10 gemäß folgenden Verfahren hergestellt. Die Einlagevorrichtung 10 wird an der innenliegenden Formhälften 32" durch Magnetkraft fixiert. Beide Formhälften 32', 32" werden anschließend zur Bildung des Hohlraums 33 zusammengesetzt, wobei sich die Einlagevorrichtung 10 in den Hohlraum 33 erstreckt. In den Hohlraum 33 wird ein fließfähiges Gussmaterial eingebracht, das die Au-ßenform 14 des Gehäuses 11 der Einlagevorrichtung 10 abschnittsweise umschließt. Das eingebrachte Gussmaterial härtet aus, wobei das Gussteil 34 ausgebildet wird. Im Anschluss wird die außenliegende Formhälfte 32' entfernt. Die magnetische Fixierung der Einlagevorrichtung 10 wird gelöst. Die Einlagevorrichtung 10 wird von der innenliegenden Formhälfte 32" getrennt und entformt. Schließlich wird das Gussteil 34 entformt, indem die innenliegende Formhälfte 32" vom Gussteil 34 getrennt wird.

Fig. 4 zeigt eine perspektivische Ansicht eines Drahtmodells der Einlagevorrichtung aus Fig. 3. Die längliche Geometrie der Einlagevorrichtung 10, konkret des Gehäuses 11, wird deutlich. Die Außenform 14 des Gehäuses 11 stimmt mit der Form 35 der Öffnung aus Fig. 1 überein.

Am Boden 18 des Gehäuses 11 sind die zwei Positioniermittel 16, konkret Fortsätze 17, angeordnet. Die Positioniermittel 16 sind im Wesentlichen mittig in Bezug auf die sich in Längsrichtung des Gehäuses erstreckenden Abschnitte der umlaufende Seitenwand 22 und tendenziell außen in Bezug auf die Längsrichtung des Gehäuses 11 angeordnet. Die Positioniermittel 16 sind im Wesentlichen symmetrisch zueinander in Bezug auf eine Querschnittsebene angeordnet, die senkrecht zur Längsrichtung ausgerichtet ist und das Gehäuses 11 mittig in Bezug auf seine Längsrichtung schneidet.

Im Drahtmodell aus Fig. 4 sind die im Aufnahmeraum 12 angeordneten sechs Magnete 15', 15" der Halteinrichtung 13 zu erkennen. Die Magnete 15', 15" sind im Aufnahmeraum 21 am Boden 18 des Gehäuses 11 angeordnet, sodass die Positioniermittel 16, konkret Fortsätze 17, auf der den Magneten 15', 15" gegenüberliegenden Seite des Bodens 18 angeordnet sind.

Zwei der sechs Magnete 15', 15" sind plattenförmig ausgebildet. Einer der beiden plattenförmigen Magnete ist in Fig. 3 dargestellt. Die weiteren vier Magnete 15', 15" aus Fig. 4 sind zylinderförmig ausgebildet.

Die plattenförmigen Magnete 15', 15" sind jeweils gegenüber einem der beiden Positioniermittel 16, konkret Fortsätze 17, angeordnet. Mit anderen Worten sind die plattenförmigen Magnete 15', 15" den Positioniermitteln 16 gegenüberliegend angeordnet. Aus der in Fig. 4 gezeigten Perspektive betrachtet, sind die Magnete 15', 15" über den Positioniermitteln 16 angeordnet.

Zu beiden in Längsrichtung des Gehäuses 11 zeigenden Seiten der plattenförmigen Magnete 15', 15" ist jeweils ein zylinderförmiger Magnet 15', 15" angeordnet. Dabei ist zwischen den plattenförmigen und den zylinderförmigen Magneten 15', 15" jeweils ein im Wesentlichen gleich großer Abstand vorgesehen.

Ein plattenförmigen Magnet 15', 15" bildet zusammen mit zwei zylinderförmigen Magneten 15', 15" jeweils eine Magnetgruppe 15b', 15b". Die Magnetgruppen 15b', 15b" sind im Wesentlichen mittig in Bezug auf die sich in Längsrichtung des Gehäuses erstreckenden Abschnitte der umlaufende Seitenwand 22 und tendenziell außen in Bezug auf die Längsrichtung des Gehäuses 11 angeordnet. Die Magnetgruppen 15b', 15b" sind im Wesentlichen symmetrisch zueinander in Bezug auf eine Querschnittsebene angeordnet, die senkrecht zur Längsrichtung ausgerichtet ist und das Gehäuses 11 mittig in Bezug auf seine Längsrichtung schneidet.

Die beiden Magnetgruppen 15b', 15b" sind im Aufnahmeraum 12 jeweils im Bereich eines Positioniermittels 16, konkret Fortsatzes 17, angeordnet. Auf diese Weise wird das dichte Anpressen der Positioniermittel 16 der Einlagevorrichtung 10 an die Gegenpositioniermittel 36 der Formhälfte 32" verstärkt.

Jeder der Magneten 15', 15" weist zwei im Wesentlichen ebene Außenflächen auf, die größer als die übrigen im Wesentlichen ebenen Außenflächen der Magneten sind. Eine dieser beiden ebenen Außenflächen liegt am Boden 18 des Gehäuses 11 an, sodass die Magnetkraft über diese Außenfläche verteilt wirkt.

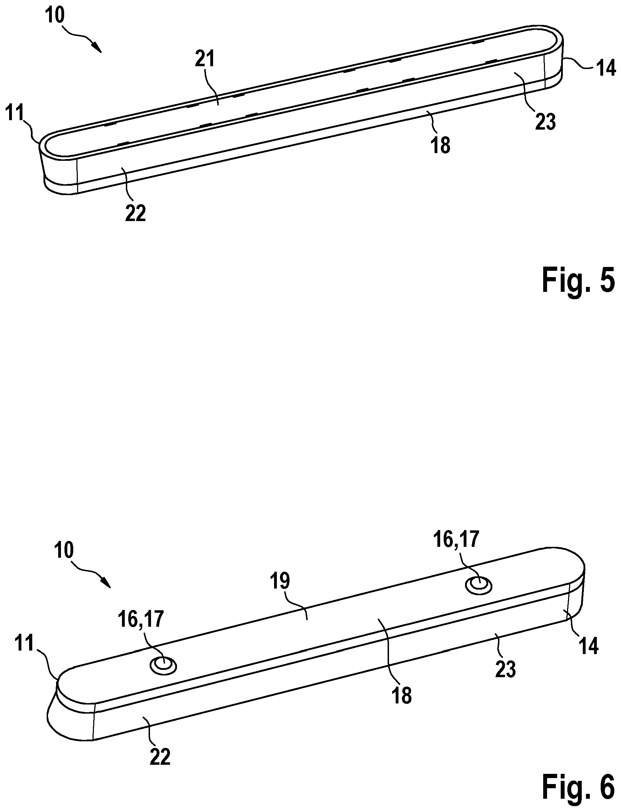

Fig. 5 zeigt eine perspektivische Ansicht der Einlagevorrichtung aus Fig. 3. In dieser Ansicht ist die langgestreckte Geometrie des Gehäuses 11 zu erkennen. Die Formschräge 23 und die umlaufende Geometrie der Seitenwand 22 wird deutlich. Der Deckel 21 ist mit der Seitenwand 22 fluiddicht verbunden, wobei der Deckel 21 zwischen die Seitenwand 22 eingesteckt ist.

Fig. 6 zeigt eine weitere perspektivische Ansicht der Einlagevorrichtung aus Fig. 3. Diese Ansicht veranschaulicht die Außenfläche des Bodens 18 des Gehäuses 11. Die Kontaktfläche 19 des Bodens 18 umgibt die zwei kegelstumpfförmigen Positioniermittel 16.

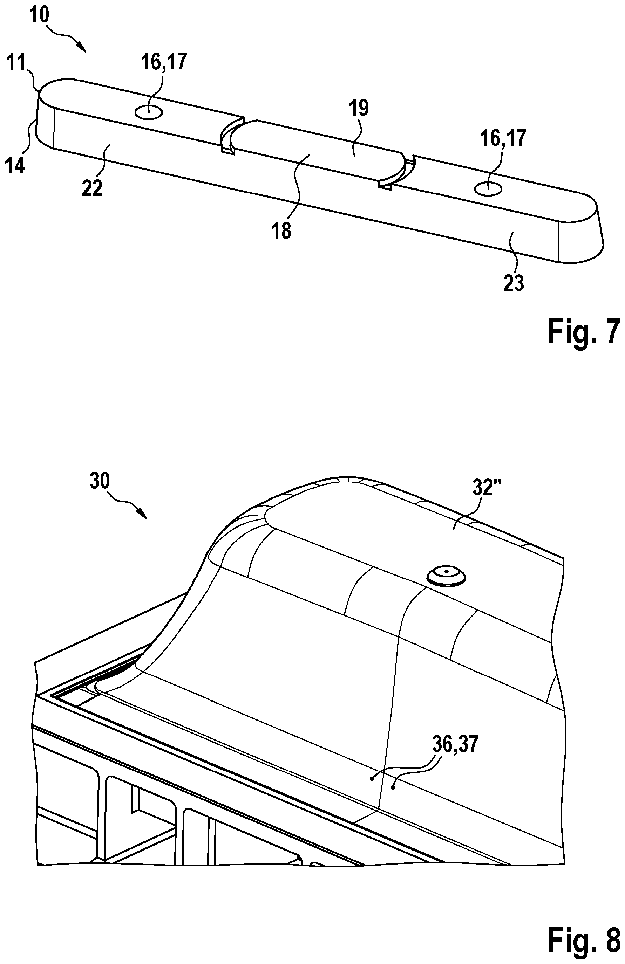

Fig. 7 zeigt eine perspektivische Ansicht einer Einlagevorrichtung nach einem weiteren erfindungsgemäßen Ausführungsbeispiel. Im Vergleich zur Einlagevorrichtung 10 aus Fig. 3 bis Fig. 6 weist der Boden 18 der Einlagevorrichtung 10 aus Fig. 7 zwei kreisbogenförmige negative Profile auf. Diese negativen Profile bilden im Gebrauch einen lokalen Spalt zwischen dem Boden 18 und einer der Formhälften 32', 32". Da dieser Spalt mit dem Hohlraum 33 fluidisch verbunden ist, kann Gussmaterial vom Hohlraum 33 in den Spalt gelangen und dort aushärten. Eine unter Verwendung der Einlagevorrichtung aus Fig. 7 gebildete Ausnehmung 31 ist in Fig. 2 gezeigt.

Fig. 8 zeigt eine perspektivische Ansicht einer innenliegenden Formhälfte 32" der Gussform 30. Die Gegenpositioniermittel 36, konkret die Ausnehmungen 37, sind zu erkennen. Die Sichtseite 38' des zu bildenden Gussteils 34 spiegelt sich in der Außenfläche der innenliegenden Formhälfte 32" wieder.

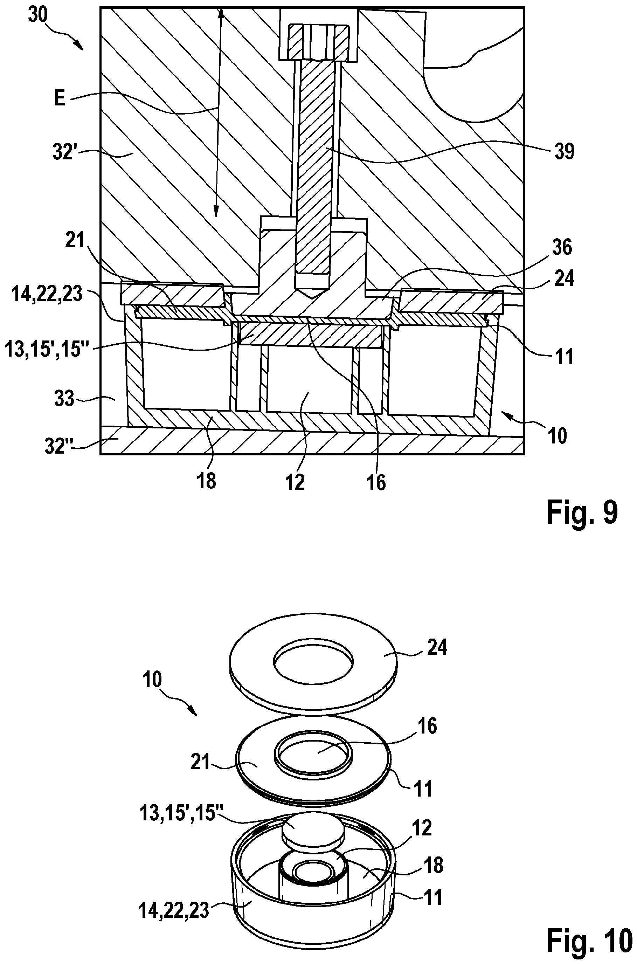

In Fig. 9 ist ein Querschnitt einer Einlagevorrichtung 10 nach einem weiteren erfindungsgemäßen Ausführungsbeispiel im Gebrauch, d. h. während des Gießens, dargestellt. Eine Gussform 30 weist zwei Formhälften 32', 32" auf, wobei eine au-ßenliegende Formhälfte 32' eine Sichtseite 38' und eine innenliegende Formhälfte 32" eine Rückseite 38" des zu bildenden Gussteils 34 definiert.

Im Unterschied zum Ausführungsbeispiel aus Fig. 3 ist die Einlagevorrichtung 10 in Fig. 9 derart in einem Hohlraum 33 zwischen den Formhälften 32', 32" angeordnet, dass die zu bildende Ausnehmung 31, konkret Öffnung 31a frei von einer Hinterschneidung in Entformungsrichtung E ist. Die Entformungsrichtung E der Formhälften 32', 32" ist im Wesentlichen parallel zur Entformungsrichtung der Einlagevorrichtung 10 ausgerichtet.

Die Einlagevorrichtung 10 weist ein im Wesentlichen zylinderförmiges Gehäuse 11 mit einem Boden 18, einem Deckel 21 und einer umlaufenden Seitenwand 22 auf. Die Seitenwand 22 bildet eine Formschräge 23, sodass die Einlagevorrichtung 10 in Entformungsrichtung E entformt werden kann.

Das Gehäuse 11 umfasst einen Aufnahmeraum 12, in dem eine Halteinrichtung 13 umfassend einen Magnet 15', 15" vorgesehen ist. Der Magnet 15', 15" ist im Wesentlichen als kreisförmige Scheibe ausgebildet. Der Magnet 15', 15" liegt an der Innenseite des Deckels 21 an und fixiert die Einlagevorrichtung 10 magnetisch an der außenliegenden Formhälfte 32'. Andere Geometrien und Anordnungen sind möglich.

Der Deckel 21 des Gehäuses 11 weist ein Positioniermittel 16 auf, das mit einem Gegenpositioniermittel 36 der außenliegenden Formhälfte 32' formschlüssig zusammenwirkt. Das Positioniermittel 16 weist eine Ausnehmung auf, in die das Gegenpositioniermittel 36 formschlüssig eingreift. Das Gegenpositioniermittel 36 ist mittels eines Befestigungsmittels 39, bspw. einer Schraube an der außenliegenden Formhälfte 32' befestigt. Andere Anordnungen und Geometrien sind möglich.

Das Gegenpositioniermittel 36 und das Befestigungsmittel 39 sind magnetisch, sodass der Magnet 15', 15" das Positioniermittel 16 des Deckels 21 dicht an das Gegenpositioniermittel 36 presst. Es ist auch möglich, dass nur das Gegenpositioniermittel 36 oder das Befestigungsmittel 39 magnetisch ist. Die außenliegende Formhälfte 32' kann auch andere Magneten aufweisen. Die außenliegende Formhälfte 32' kann aus einem magnetischen Werkstoff, insbesondere umfassend Eisen, Nickel, Kobalt oder eine Kombination davon, gebildet sein.

Die Einlagevorrichtung 10 weist einen Gummiring 24 auf, der an der Außenseite des Deckels 21 angeordnet ist. Der Gummiring 24 weist eine im wesentlichen kreisringförmige Geometrie auf, sodass das Positioniermittel 16 vom Gummiring 24 umringt wird. Andere Geometrien und Anordnungen sind möglich.

Der Gummiring 24 ist federnd ausgebildet und unter axialer Vorspannung Zwischen Deckel 21 und Formhälfte 32' angeordnet. Auf diese Weise presst der Gummiring 24 den Boden 18 des Gehäuses 11 dicht an die innenliegende Formhälfte 32" an. Vorteilhafterweise wird dadurch die Menge an Gussmaterial, das zwischen dem Boden 18 und der innenliegende Formhälfte 32" gelangt, und somit der Aufwand einer Nachbearbeitung des Gussteils 34 an der Sichtseite 38' reduziert. Der Gummiring 24 weist eine im wesentlichen kreisringförmige Geometrie auf. Andere Geometrien sind möglich. Der Gummiring 24 ist im vorliegenden Ausführungsbeispiel aus Silikon gebildet. Der Gummiring 24 kann aus anderen Werkstoffen gebildet sein.

Fig. 10 zeigt eine Explosionsdarstellung der Einlagevorrichtung aus Fig. 9. Die kreisringförmige Geometrie des Gummirings 24 wird deutlich. Die zylinderförmige Form des Gehäuses 11 ist zu erkennen. Die Anordnung des als kreisförmige Scheibe ausgebildeten Magnet 15', 15" ist ersichtlich.

### Bezuaszeichenliste

- 10: Einlageeinrichtung
- 11: Gehäuse
- 12: Aufnahmeraum
- 13: Haltevorrichtung
- 14: Außenform
- 15', 15": Magnet
- 15a', 15a": Einzelmagnet
- 15b', 15b": Magnetgruppe
- 16: Positioniermittel
- 17: Fortsatz
- 18: Boden
- 19: Kontaktfläche
- 21: Deckel
- 22: Seitenwand
- 23: Formschräge
- 24: Gummiring
- 30: Gussform
- 31: Ausnehmung
- 31a: Öffnung bzw. Durchgangsöffnung
- 31b: Vertiefung
- 32', 32": Formhälften
- 33: Hohlraum
- 34: Gussteil
- 35: Form der Öffnung
- 36: Gegenpositioniermittel
- 37: Ausnehmung
- 38', 38": Sichtseite, Rückseite
- 39: Befestigungsmittel
- E: Entformungsrichtung

## Patentansprüche

1. Einlagevorrichtung (10) für eine Gussform (30) zur Bildung wenigstens einer Ausnehmung (31) in einem Gussteil (34), insbesondere Öffnung (31a) und/oder Vertiefung (31b), wobei die Gussform (30) zumindest zwei Formhälften (32', 32") aufweist, wobei die Einlagevorrichtung ein Gehäuse (11) mit einem Aufnahmeraum (12) und wenigstens eine Halteeinrichtung (13) zum Halten des Gehäuses (11) an zumindest einer der Formhälften (32', 32") umfasst, die in dem Aufnahmeraum (12) angeordnet ist, wobei das Gehäuse (11) wenigstens eine Außenform (14) aufweist, die die Form (35) der wenigstens einen Ausnehmung (31) des Gussteils (34) zumindest abschnittsweise definiert, und die Halteeinrichtung (13) wenigstens einen Magnet (15', 15") umfasst, der das Gehäuse (11) im Gebrauch an der Formhälfte (32', 32") magnetisch fixiert.

2. Einlagevorrichtung (10) nach Anspruch 1,
**dadurch gekennzeichnet, dass**
die Halteeinrichtung (13) wenigstens zwei Magneten (15', 15") aufweist, die in dem Aufnahmeraum (12) nebeneinander angeordnet sind.

3. Einlagevorrichtung (10) nach Anspruch 1 oder 2,
**gekennzeichnet durch,** dass
die Einlagevorrichtung (10) wenigstens ein Positioniermittel (16) aufweist, das an dem Gehäuse (11) außen angeordnet und dazu angepasst ist, mit einem Gegenpositioniermittel (36) einer der Formhälften (32', 32") formschlüssig zusammenzuwirken.

4. Einlagevorrichtung (10) nach Anspruch 3,
**dadurch gekennzeichnet, dass**
das Positioniermittel (16) wenigstens einen Fortsatz (17), insbesondere einen Stift, umfasst, der von dem Gehäuse (11), insbesondere einem Boden (18) des Gehäuses (11), abstehend ausgebildet ist, und/oder dass der Magnet (15', 15"), insbesondere zumindest einer der Magneten (15', 15"), dem Positioniermittel (16) zumindest abschnittsweise gegenüber angeordnet ist.

5. Einlagevorrichtung (10) nach einem der vorhergehenden Ansprüche,
**dadurch gekennzeichnet, dass**
der Magnet (15', 15"), insbesondere die Magnete (15', 15"), plattenförmig und/oder zylindrisch ausgebildet ist.

6. Einlagevorrichtung (10) nach einem der vorhergehenden Ansprüche,
**dadurch gekennzeichnet, dass**
das Gehäuse (11) einen Boden (18) aufweist, an dem der Magnet (15', 15"), insbesondere die Magnete (15', 15"), anliegt, wobei der Boden (18) wenigstens eine Kontaktfläche (19) aufweist, die dem Aufnahmeraum (12), insbesondere dem Magnet (15', 15"), gegenüber angeordnet ist und im Gebrauch durch Magnetkraft an einer der Formhälften (32', 32") flächig angepresst ist.

7. Einlagevorrichtung (10) nach einem der vorhergehenden Ansprüche,
**dadurch gekennzeichnet, dass**
das Gehäuse (11) wenigstens einen Deckel (21) aufweist, der den Aufnahmeraum (12) des Gehäuses (11) fluidabdichtend verschließt.

8. Einlagevorrichtung (10) nach Anspruch 7,
**dadurch gekennzeichnet, dass**
der Deckel (21) dem Boden (18) gegenüber angeordnet ist, wobei der Deckel (21) wenigstens eine offene und/oder geschlossene Seite und der Boden (18) wenigstens eine offene und/oder geschlossene Seite der wenigstens einen zu bildenden Ausnehmung (31) definieren.

9. Einlagevorrichtung (10) nach einem der vorhergehenden Ansprüche,
**dadurch gekennzeichnet, dass**
das Gehäuse (11) wenigstens eine Seitenwand (22) aufweist, die den Aufnahmeraum (12) umlaufend begrenzt, wobei die Seitenwand (22) zumindest abschnittsweise eine Formschräge (23) bildet.

10. Einlagevorrichtung (10) nach einem der vorhergehenden Ansprüche,
**dadurch gekennzeichnet, dass**
die Außenform (14), insbesondere die Seitenwand (22), des Gehäuses (11) frei von einer Hinterschneidung ist.

11. Vorrichtung zur Herstellung eines Gussteils (34) mit einer Gussform (30), die wenigstens zwei Formhälften (32', 32"), insbesondere eine innenliegende und eine außenliegende Formhälfte, aufweist, und wenigstens einer Einlagevorrichtung (10) nach einem der vorhergehenden Ansprüche, wobei die Formhälften (32', 32") einen dazwischenliegenden Hohlraum (33) zur Bildung des Gussteils (34) begrenzen und die Einlagevorrichtung (10) an einer der beiden Formhälften (32', 32") derart magnetisch fixiert ist, dass sich das Gehäuse (11) mit seiner Außenform (14) in den Hohlraum (33) erstreckt.

12. Vorrichtung nach Anspruch 11,
**dadurch gekennzeichnet, dass**
die Formhälfte (32', 32"), insbesondere die innenliegende Formhälfte, an der die Einlagevorrichtung (10) angeordnet ist, zur Fixierung der Einlagevorrichtung (10) zumindest abschnittsweise magnetisch ist.

13. Vorrichtung nach Anspruch 11 oder 12,
**dadurch gekennzeichnet, dass**
wenigstens eine der beiden Formhälften (32', 32"), insbesondere die innenliegende Formhälfte, wenigstens ein Gegenpositioniermittel (36) aufweist, das mit wenigstens einem Positioniermittel (16) des Gehäuses (11) der Einlagevorrichtung (10) formschlüssig zusammenwirkt.

14. Verfahren zur Herstellung eines Gussteils (34) mit wenigstens einer Ausnehmung (31), insbesondere Öffnung (31a) und/oder Vertiefung (31b), unter Verwendung wenigstens einer Gussform (30) mit wenigstens zwei Formhälften (32', 32") und wenigstens einer Einlagevorrichtung (10) nach einem der Ansprüche 1 bis 10, wobei das Verfahren folgende Schritte umfasst:
- Fixieren der Einlagevorrichtung (10) an einer ersten der beiden Formhälften (32', 32") durch Magnetkraft;
- Zusammensetzen der beiden Formhälften (32', 32") zur Bildung eines Hohlraums (33), wobei sich die Einlagevorrichtung (10) in den Hohlraum (33) erstreckt;
- Einbringen eines fließfähigen Gussmaterials in den Hohlraum (33), das die Außenform (14) des Gehäuses (11) der Einlagevorrichtung (10) zumindest abschnittsweise umschließt;
- Aushärten des eingebrachten Gussmaterials, wobei ein Gussteil (34) ausgebildet wird;
- Entfernen zumindest einer der beiden Formhälften (32', 32"), insbesondere der zweiten Formhälfte (32', 32"); und
- Entformen des Gussteils (34) und/oder der Einlagevorrichtung (10), insbesondere derart, dass die magnetische Fixierung der Einlagevorrichtung (10) gelöst wird.

15. Verfahren nach Anspruch 14,
**dadurch gekennzeichnet, dass**
beim Entformen des Gussteils (34) die Einlagevorrichtung (10) von der ersten Formhälfte (32', 32") getrennt wird und/oder das Entformen der Einlagevorrichtung (10) vor dem Entformen des Gussteils (34) erfolgt.

## Claims

1. An insertion device (10) for a mold (30) to form at least one recess (31) in a casting (34), in particular an opening (31a) and/or depression (31b), wherein the casting (30) has at least two mold halves (32', 32"), wherein the insertion device comprises a housing (11) with a receiving room (12) and at least one retaining device (13) for retaining the housing (11) on at least one of the mold halves (32', 32"), which is arranged in the receiving room (12), wherein the housing (11) has at least one outer mold (14) that at least sectionally defines the shape (35) of the at least one recess (31) of the casting (34), and the retaining device (13) comprises at least one magnet (15', 15"), which magnetically fixes the housing (11) to the mold half (32', 32") during use.

2. The insertion device (10) according to claim 1,
**characterized in that**
the retaining device (13) has at least two magnets (15', 15"), which are arranged one next to each other in the receiving room (12).

3. The insertion device (10) according to claim 1 or 2,
**characterized in that**
the insertion device (10) has at least one positioning means (16), which is arranged on the outside of the housing (11) and adjusted to positively interact with a counter-positioning means (36) of one of the mold halves (32', 32").

4. The insertion device (10) according to claim 3,
**characterized in that**
the positioning means (16) comprises at least one extension (17), in particular a pin, which is designed to project from the housing (11), in particular a floor (18) of the housing (11), and or that the magnet (15', 15"), in particular at least one of the magnets (15', 15"), is at least sectionally arranged opposite the positioning means (16).

5. The insertion device (10) according to one of the preceding claims,
**characterized in that**
the magnet (15', 15"), in particular the magnets (15', 15"), are platelike and/or cylindrical in design.

6. The insertion device (10) according to one of the preceding claims,
**characterized in that**
the housing (11) has a floor (18), against which the magnet (15', 15"), in particular the magnets (15', 15"), abut, wherein the floor (18) has at least one contact surface (19), which is arranged opposite the receiving room (12), in particular the magnet (15', 15"), and is pressed flat against one of the mold halves (32', 32") by magnetic force during use.

7. The insertion device (10) according to one of the preceding claims,
**characterized in that**
the housing (11) has at least one cover (21), which seals the receiving room (12) of the housing (11) fluid tight.

8. The insertion device (10) according to claim 7,
**characterized in that**
the cover (21) is arranged opposite the floor (18), wherein the cover (21) defines at least one open and/or closed side, and the floor (18) defines at least one open and/or closed side, of the at least one recess (31) to be formed.

9. The insertion device (10) according to one of the preceding claims,
**characterized in that**
the housing (11) has at least one side wall (22), which circumferentially borders the receiving room (12), wherein the side wall (22) at least sectionally forms a shaped bevel (23).

10. The insertion device (10) according to one of the preceding claims,
**characterized in that**
the outer mold (14), in particular the side wall (22), of the housing (11) has no undercut.

11. A device for manufacturing a casting (34) with a mold (30), which has at least two mold halves (32', 32"), in particular an internal and an external mold half, and at least one insertion device (10) according to one of the preceding claims, wherein the mold halves (32', 32") border an interspersed cavity (33) to form the casting (34), and the insertion device (10) is magnetically fixed on one of the two mold halves (32', 32") in such a way that the outer mold (14) of the housing (11) extends into the cavity (33).

12. The device according to claim 11,
**characterized in that**
the mold half (32', 32"), in particular the internal mold half, on which the insertion device (10) is arranged, is at least sectionally magnetic to fix in place the insertion device (10).

13. The device according to claim 11 or 12,
**characterized in that**
at least one of the two mold halves (32', 32"), in particular the internal mold half, has at least one counter-positioning means (36), which positively interacts with at least one positioning means (16) of the housing (11) of the insertion device (10).

14. A method for manufacturing a casting (34) with at least one recess (31), in particular an opening (31a) and/or depression (31b), with the use of at least one mold (30) with at least two mold halves (32', 32") and at least one insertion device (10) according to one of claims 1 to 10, wherein the method comprises the following steps:
- Fixing the insertion device (10) to a first of the two mold halves (32', 32") via magnetic force;
- Assembling the two mold halves (32', 32") to form a cavity (33), wherein the insertion device (10) extends into the cavity (33);
- Inserting a flowable casting material into the cavity (33),which at least sectionally envelops the outer mold (14) of the housing (11) of the insertion device (10) ;
- Hardening the introduced casting material, wherein a casting (34) is formed;
- Removing at least one of the two mold halves (32', 32"), in particular the second mold half (32', 32"); and
- Demolding the casting (34) and/or the insertion device (10), in particular so as to release the magnetic fixation of the insertion device (10).

15. The method according to claim 14,
**characterized in that**,
while demolding the casting (34), the insertion device (10) is separated from the first mold half (32', 32") and/or the insertion device (10) is demolded before the casting (34) is demolded.

## Revendications

1. Dispositif d'insertion (10) destiné à un moule (30), pour créer au moins un évidement (31) dans une pièce moulée (34), notamment un orifice (31a) et / ou un renfoncement (31b), le moule (30) comportant au moins deux moitiés de moule (32', 32"), le dispositif d'insertion comprenant un boîtier (11) pourvu d'un espace réceptacle (12) et au moins un système de maintien (13), destiné à maintenir le boîtier (11) sur au moins l'une des moitiés de moule (32', 32") qui est placée dans l'espace réceptacle (12), le boîtier (11) comportant au moins un moule extérieur (14) qui définit au moins par endroits la forme (35) de l'au moins un évidement (31) de la pièce moulée (34) et le système de maintien (13) comprenant au moins un aimant (15', 15"), qui en cours d'utilisation, fixe magnétiquement le boîtier (11) sur la moitié de moule (32', 32") .

2. Dispositif d'insertion (10) selon la revendication 1, **caractérisé en ce que**
le système de maintien (13) comporte au moins deux aimants (15', 15") qui sont placés côte à côte dans l'espace réceptacle (12).

3. Dispositif d'insertion (10) selon la revendication 1 ou 2,
**caractérisé en ce que**
le dispositif d'insertion (10) comporte au moins un moyen de positionnement (16) qui est placé à l'extérieur sur le boîtier (11) et qui est adapté pour coopérer par complémentarité de forme avec un moyen de positionnement (36) antagoniste de l'une des moitiés de moule (32', 32").

4. Dispositif d'insertion (10) selon la revendication 3, **caractérisé en ce que**
le moyen de positionnement (16) comprend au moins un prolongement (17), notamment une tige, qui est conçu(e) de sorte à saillir à partir du boîtier (11), notamment d'un fond inférieur (18) du boîtier (11) et / ou **en ce que** l'aimant (15', 15"), notamment au moins l'un des aimants (15', 15"), est placé au moins par endroits au vis-à-vis du moyen de positionnement (16).

5. Dispositif d'insertion (10) selon l'une quelconque des revendications précédentes,
**caractérisé en ce que**
l'aimant (15', 15"), notamment les aimants (15', 15"), est conçu en forme de plaque et / ou de forme cylindrique.

6. Dispositif d'insertion (10) selon l'une quelconque des revendications précédentes,
**caractérisé en ce que**
le boîtier (11) comporte un fond inférieur (18) auquel l'aimant (15', 15"), notamment les aimants (15', 15") est adjacent, le fond inférieur (18) comportant au moins une surface de contact (19) qui est placée au vis-à-vis de l'espace réceptacle (12), notamment de l'aimant (15', 15"), et qui en cours d'utilisation est pressée à plat par une force magnétique sur l'une des moitiés de moule (32', 32").

7. Dispositif d'insertion (10) selon l'une quelconque des revendications précédentes,
**caractérisé en ce que**
le boîtier (11) comporte au moins un couvercle (21) qui ferme de manière étanche aux fluides l'espace réceptacle (12) du boîtier (11).

8. Dispositif d'insertion (10) selon la revendication 7, **caractérisé en ce que**
le couvercle (21) est placé au vis-à-vis du fond inférieur (18), le couvercle (21) définissant au moins un côté ouvert et / ou fermé et le fond inférieur (18) définissant au moins un côté ouvert et / ou fermé de l'au moins un évidement (31) qui doit être créé.

9. Dispositif d'insertion (10) selon l'une quelconque des revendications précédentes,
**caractérisé en ce que**
le boîtier (11) comporte au moins une paroi latérale (22) qui délimite en périphérie l'espace réceptacle (12), la paroi latérale (22) formant au moins par endroits une dépouille du moule (23).

10. Dispositif d'insertion (10) selon l'une quelconque des revendications précédentes,
**caractérisé en ce que**
le moule extérieur (14), notamment la paroi latérale (22) du boîtier (11) est exempt(e) d'une contre-dépouille.

11. Dispositif, destiné à fabriquer une pièce moulée (34) avec un moule (30), qui comporte au moins deux moitiés de moule (32', 32"), notamment une moitié de moule interne et une moitié de moule externe et au moins un dispositif d'insertion (10) selon l'une quelconque des revendications précédentes, les moitiés de moule (32', 32") délimitant une cavité (33) intermédiaire, pour la création de la pièce moulée (34) et le dispositif d'insertion (10) étant fixé de manière magnétique sur l'une des deux moitiés de moule (32', 32"), de telle sorte que le boîtier (11) s'étende dans la cavité (33) par son moule extérieur (14).

12. Dispositif selon la revendication 11,
**caractérisé en ce que**
la moitié de moule (32', 32"), notamment la moitié de moule interne, sur laquelle est placé le dispositif d'insertion (10) est au moins magnétique par endroits, pour fixer le dispositif d'insertion (10).

13. Dispositif selon la revendication 11 ou 12, **caractérisé en ce**
**qu'**au moins l'une des deux moitiés de moule (32', 32"), notamment la moitié de moule interne comporte au moins un moyen de positionnement (36) antagoniste, qui coopère par complémentarité de forme avec l'au moins un moyen de positionnement (16) du boîtier (11) du dispositif d'insertion (10).

14. Procédé, destiné à fabriquer une pièce moulée (34) pourvue d'au moins un évidement (31), notamment un orifice (31a) et / ou un renfoncement (31b), en utilisant au moins un moule (30) avec au moins deux moitiés de moule (32', 32") et au moins un dispositif d'insertion (10) selon l'une quelconque des revendications 1 à 10, le procédé comprenant les étapes suivantes, consistant à :
- fixer le dispositif d'insertion (10) sur une première des deux moitiés de moule (32', 32") par force magnétique ;
- assembler les deux moitiés de moule (32', 32") pour créer une cavité (33), le dispositif d'insertion (10) s'étendant dans la cavité (33) ;
- introduire dans la cavité (33) une matière de moulage fluide qui entoure au moins par endroits le moule extérieur (14) du boîtier (11) du dispositif d'insertion (10) ;
- faire solidifier la matière de moulage introduite, une pièce moulée (34) étant créée ;
- retirer au moins l'une des deux moitiés de moule (32', 32"), notamment la deuxième moitié de moule (32', 32") ; et
- démouler la pièce moulée (34) et / ou le dispositif d'insertion (10), notamment de telle sorte que la fixation magnétique du dispositif d'insertion (10) se désolidarise.

15. Procédé selon la revendication 14,
**caractérisé en ce que**
lors du démoulage de la pièce moulée (34), le dispositif d'insertion (10) est séparé de la première moitié de moule (32', 32") et / ou **en ce que** le démoulage du dispositif d'insertion (10) a lieu avant le démoulage de la pièce moulée (34).
